# EUROPEAN PATENT APPLICATION

(11) **EP 1 251 450 A1**
(43) Date of publication of application: **23.10.2002**
(21) Application number: 02252460.7
(22) Date of filing: 05.04.2002
(51) Int. Cl.: G06K 7/00

(54) **Item processing device with barcode reader and intergrated RFID interrogator**

(30) Priority: 09.04.2001 US 829177
(71) Applicant: NCR INTERNATIONAL INC., Dayton, Ohio 45479 (US)
(72) Inventor: Goodwin, John C., III, Suwanee, Georgia 30024 (US)
(74) Representative: Williamson, Brian

(57) **Abstract**

An item processing device which process both barcode and radio frequency identification (RFID) labels. The item processing device includes a barcode reader and a radio frequency product label interrogator coupled to the barcode reader.

## Description

The present invention relates to checkout systems in supermarkets and other retail establishments, and more specifically to an item processing device including a barcode reader and integrated RFID interrogator.

Checkout systems typically include barcode readers. Today, nearly all products are labelled with barcodes, either by the manufacturers or the retailers of such products.

Barcode readers come in various types for various purposes. The most common scanners are optical barcode readers which include lasers and mirrors for generating a scan pattern. Some are mounted in checkout counters, while others are portable and hand-held. An example barcode reader is disclosed in U.S. Patent No. 5,229,588.

Some items would not be identifiable and recordable by a barcode reader, if they were labelled with Radio Frequency Identification (RFID) labels rather than barcode labels. RFID technology provides an alternative to bar code reader technology for distinguishing and recording items for purchase. Some of the uses of RFID technology are disclosed in U.S. Patent No. 6,019,394.

It would be desirable to combine an RFID interrogator with a bar code reader into a single item processing peripheral in order to maintain operator focus for item entry on a single area of a checkout counter, the area where the bar code reader is located.

According to a first aspect of the present invetion there is provided an item processing device comprising:
a barcode reader; and
a radio frequency product label interrogator coupled to the barcode reader.

According to a second aspect of the present invention there is provided an item checkout device comprising
a barcode reader including
   control circuitry for obtaining first identification information from barcode labels; and
   a communication port coupled to the control circuitry for obtaining second identification information from a radio frequency product label; and
a radio frequency interrogator which provides the second identification information to the communication port.

According to a third aspect of the present invention there is provided an item processing method comprising the steps of:
activating an item processing device including a barcode reader to obtain first identification information from an item and a radio frequency product label interrogator to obtain second identification information from the item;
if the item has a barcode label, obtaining the first identification information by the barcode reader; and
if the item has a radio frequency product label, obtaining the second identification information by the radio frequency product label interrogator.

An embodiment of the present invention will now be described, by way of example, wit reference to the accompanying drawings,in which:
Fig. 1 is a block diagram of a transaction system with RFID capability;
Fig. 2 is a block diagram of a barcode reader of the present invention; and
Fig. 3 is a flow diagram illustrating the operation of the checkout apparatus.

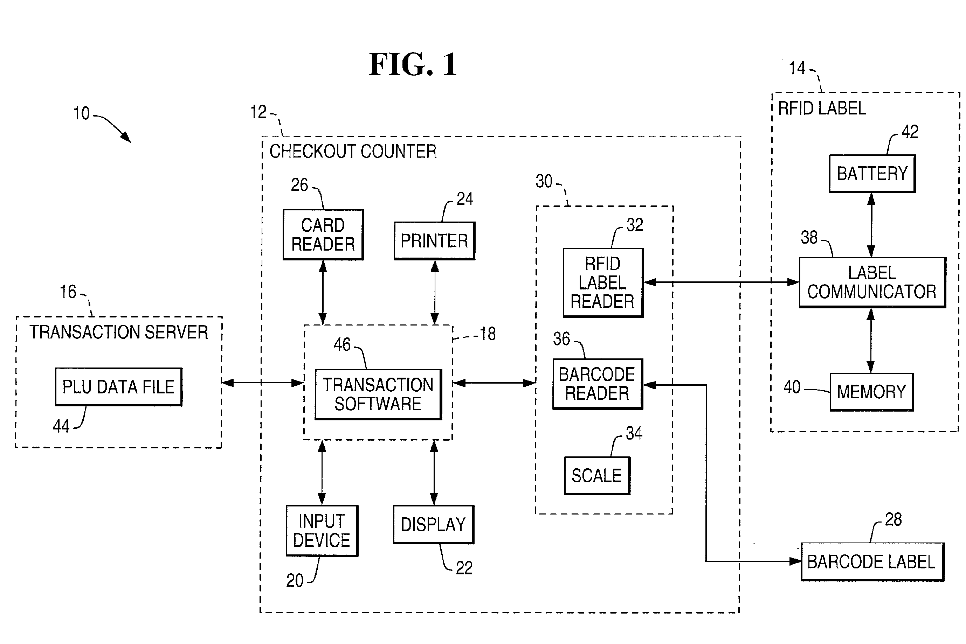

Referring to Fig. 1, transaction system 10 primarily includes checkout counter 12 and transaction server 16.

Checkout counter 12 includes terminal 18, input device 20, display 22, printer 24, card reader 26, and label reader 30.

Terminal 18 controls operation of checkout counter 12 and executes transaction software 46.

Input device 20 records customer selections. Input device 20 may be a touch screen or keyboard.

Display 22 displays program instructions to assist the customer through a transaction. Display 22 may be a liquid crystal display and may be combined with input device 20 as a touch screen.

Printer 24 prints transaction information on receipt paper.

Card reader 26 reads information from customer payment and identification cards. Card reader 26 may include a magnetic stripe reader or smart card reader or combination of both.

Item checkout apparatus 30 reads RFID label 14 and barcode label 28. Item checkout apparatus 30 includes RFID label reader 32, scale 34, and barcode reader 46.

RFID label reader 32 reads identification information stored in RFID label 14.

Barcode reader 46 reads barcode label 28.

Scale 34 provides weight information for produce items and other random weight or bulk items.

RFID label 14 is an identification label. RFID label 14 may vary in size, depending upon product size, and may be visible or hidden when attached to a product. RFID label 14 may be removably or permanently attached to the product.

In one embodiment, RFID label 14 includes label communicator 38, RFID memory, and battery 42.

Label communicator 38 sends item identification information stored in RFID memory 40 to label reader 32. Label communicator 38 may include an RF transceiver.

Memory 40 stores item identification information and may include a read-only memory (ROM) for one-time use, or a programmable ROM (EPROM) for repeated use.

Battery 42 provides power to label communicator 38.

In another embodiment, RFID label 14 may be a passive label. Passive RFID labels use very little energy and may only include label communicator 38. Power may be derived from radio waves.

Label communicator 38 may include a reflective antenna which has a frequency which is unique among RFID labels 14. Label communicator 38 communicates RFID label identification information which must be cross-referenced to obtain item identification information from a table. Label communicator 38 may include a number of antennas, such as conductive ink antennas.

Transaction server 16 receives item identification information from terminal 18 and returns price information from price look-up data file 44. Terminal 18 obtains item identification information from item checkout apparatus 30.

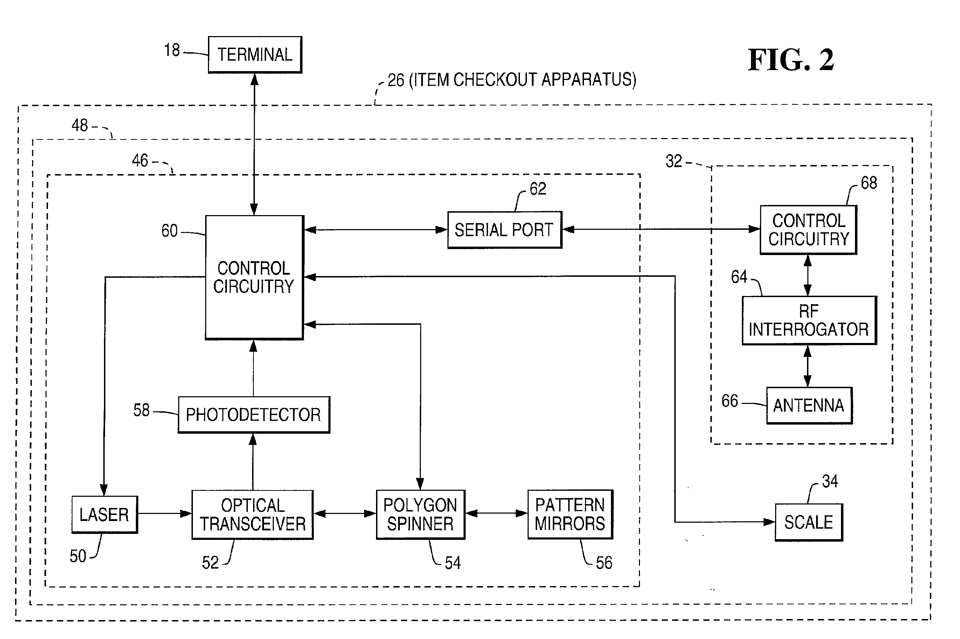

Turning now to Fig. 2, item checkout apparatus 30 is illustrated in detail.

RFID label reader 32 is preferably located inside housing 48 of barcode reader 46, but may also be affixed to the outside of the housing 48 as well. RFID label reader 32 includes label interrogator 64, antenna 66, and control circuitry 68.

Label interrogator 64 interrogates RFID label 14 to obtain identification information. Label interrogator 64 may include an RF transceiver. label interrogator 64 uses antenna 66.

Control circuitry 68 controls operation of RFID label reader 32 and provides identification information to terminal 18 through barcode reader 46. Control circuitry 68 may include commonly available circuitry for sensing the presence of an item. Control circuitry 60 may also wakeup certain components, such as laser 50, for operation.

Control circuitry 68 feeds identification information to control circuitry 60 through serial port 62, but may also feed identification information directly to terminal 18 without going through serial port 62 or control circuitry 60.

An example barcode reader 46 primarily includes laser 50, optical transceiver 52, polygon spinner 54, pattern mirrors 56, photodetector 58, and control circuitry 60. However, other types of barcode readers, including portable or hand-held barcode readers, are envisioned as well.

Laser 50 provides a laser beam. The laser beam passes through optical transceiver 52, which includes a mirrored collecting surface and an aperture for passing the laser beam.

Polygon spinner 54 includes mirrored facets which directing the laser beam at pattern mirrors 56. Pattern mirrors 56 direct the laser beam to produce a plurality of scan lines.

Light reflected from barcode label 28 is directed by pattern mirrors 56 to polygon spinner 54, which directs the light to optical transceiver 52. The collecting surface of optical transceiver 52 directs the light to photodetector 58, which generates electrical signals representing the intensity of the reflected light.

Control circuitry 60 interprets the electrical signals to determine item identification information.

Control circuitry 60 optionally obtains item identification information or RFID label identification information from RFID label reader 32 through serial port 62. If configured this way, control circuitry 60 passes identification information from both barcode label 28 and RFID label 14 to terminal 18.

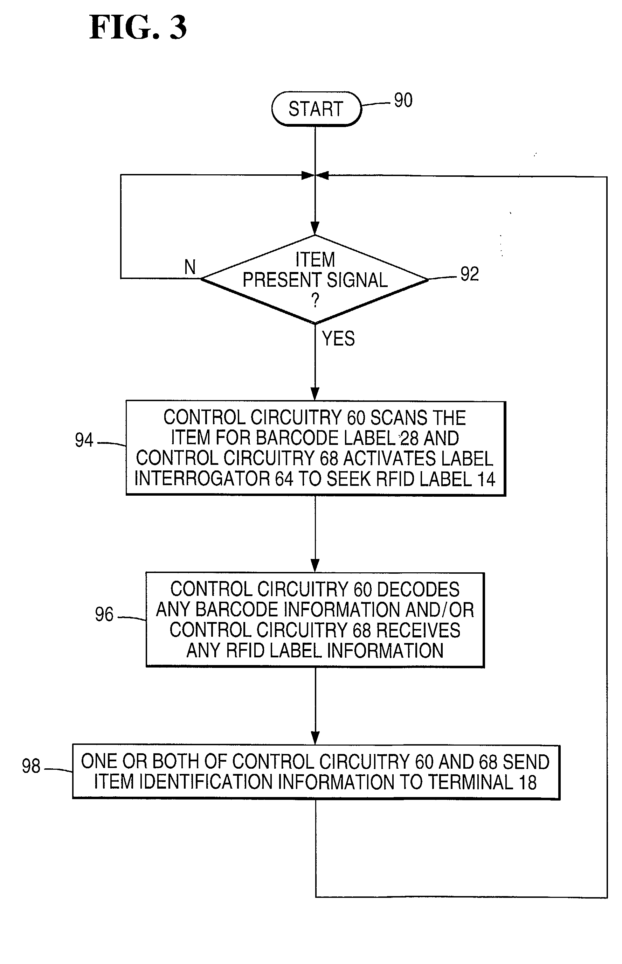

Referring now to Fig. 3, the operation of item checkout apparatus 30 is illustrated in detail beginning with START 90.

In step 92, item checkout apparatus 30 waits for an item present signal to read a label.

Control circuitry 60 within barcode reader 46 may generate the signal, if it is equipped with item sensing circuitry. In the configuration of Fig. 2, control circuitry 60 may alert control circuitry 68 through serial port 62. Regardless of configuration, transaction software 46 may provide the signal to both control circuitry 60 and 68 in response to operator input from input device 20.

In step 94, control circuitry 60 activates any inactive components in barcode reader 46 and scans the item for barcode label 28, and control circuitry 68 activates label interrogator 64 to seek RFID label 14.

In step 96, control circuitry 60 examines reflected light from the item for barcode information, and if control circuitry 60 senses barcode information, control circuitry 60 decodes the barcode information to obtain item identification information. Control circuitry 68 determines whether RFID label information has been received.

In step 98, one or both of control circuitry 60 and 68 send identification information to terminal 18. The identification information from both control circuitry 60 and 68 may be item identification information. Alternatively, control circuitry 68 may send RFID label identification information from which item identification information can be derived from a look-up table.

Transaction software 36 may compare item identification information derived from control circuitry 60 and 68 when both send it. Transaction software 36 sends a price request including the item identification information to transaction server 16. Operation returns to step 92 to await another signal.

Although the present invention has been described with particular reference to certain preferred embodiments thereof, variations and modifications can be effected within the scope of the present invention.

## Claims

1. An item processing device comprising:
a barcode reader; and
a radio frequency product label interrogator coupled to the barcode reader.

2. An item processing device as claimed in claim 1, wherein the barcode reader includes a housing; and
the radio frequency product label interrogator is located within the housing.

3. An item processing device as recited in claim 2, further comprising:
a scale within said housing.

4. An item checkout device comprising
a barcode reader including
control circuitry for obtaining first identification information from barcode labels; and
a communication port coupled to the control circuitry for obtaining second identification information from a radio frequency product label; and
a radio frequency interrogator which provides the second identification information to the communication port.

5. An item processing method comprising the steps of:
activating an item processing device including a barcode reader to obtain first identification information from an item and a radio frequency product label interrogator to obtain second identification information from the item;
if the item has a barcode label, obtaining the first identification information by the barcode reader; and
if the item has a radio frequency product label, obtaining the second identification information by the radio frequency product label interrogator.

6. A method as claimed in claim 5, comprising the steps of:
sensing the item by the item processing device; and
activating the barcode reader and the radio frequency product label interrogator in response to sensing the item by the item processing device.

7. A method as claimed in claim 5 or claim 6, comprising the step of:
if the item has both the barcode label and the radio frequency product label, identifying the item using both the first and second identification information.

8. A method as claimed in any of claims 5 to 7, further comprising the step of:
obtaining a price of the item if the first and second identification information are associated with the item.

9. A method as claimed in any of claims 5 to 8, further comprising the step of:
obtaining a price of the item using the first identification information if only the first identification information is obtained.

10. A method as claimed in any of claims 5 to 9, further comprising the step of:
obtaining a price of the item using the second identification information if only the first identification information is obtained.
